Europäisches Patentamt

European Patent Office

Office européen des brevets

(19)

(11) Veröffentlichungsnummer: **0 448 165 A2**

(12) **EUROPÄISCHE PATENTANMELDUNG**

(21) Anmeldenummer: **91200572.5**

(22) Anmeldetag: **18.03.91**

(51) Int. Cl.5: **H02M 7/521**

(30) Priorität: **21.03.90 DE 4009020**

(43) Veröffentlichungstag der Anmeldung:
**25.09.91 Patentblatt 91/39**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Fuchs, Peter**
**Bahnstrasse 90**
**W-2085 Quickborn(DE)**

(74) Vertreter: **Hartmann, Heinrich, Dipl.-Ing. et al**
**Philips Patentverwaltung GmbH**
**Wendenstrasse 35 Postfach 10 51 49**
**W-2000 Hamburg 1(DE)**

(54) **Serienresonanz-Wechselrichter, insbesondere für einen Röntgengenerator.**

(57) Die Erfindung betrifft einen Serienresonanz-Wechselrichter, insbesondere für einen Röntgengenerator, mit einem Serienresonanzkreis, der über wenigstens zwei im Gegentakt geschaltete Thyristoren und dazu antiparallel geschaltete Dioden mit einer Gleichspannungsquelle koppelbar ist, mit einem Nulldurchgangsdetektor, der ein Nulldurchgangssignal erzeugt, sobald der Strom durch den Serienresonanzkreis nach seinem Nulldurchgang einen Stellenwert überschreitet, und mit einem durch den Nulldurchgangsdetektor gesteuerten Zündimpulserzeuger zur Erzeugung von Zündimpulsen für die Thyristoren. Um einen ungewollten Abbruch des Wechselrichterbetriebes zu verhindern, ist vorgesehen, daß eine Meßeinrichtung zum Messen des Zeitraums zwischen einem Zündimpuls und dem darauffolgenden Nulldurchgangssignal, einem Speicher zum Speichern dieses Zeitraums für den Normalbetrieb und eine Schaltung zum Erzeugen eines Hilfs-Nulldurchgangssignals, wenn der gemessene Zeitraum den gespeicherten Zeitraum um mehr als einen vorgegebenen Wert überschreitet.

FIG.3

EP 0 448 165 A2

Die Erfindung betrifft einen Serienresonanz-Wechselrichter, insbesondere für einen Röntgengenerator, mit einem Serienresonanzkreis, der über wenigstens zwei im Gegentakt geschaltete Thyristoren und dazu antiparallel geschaltete Dioden mit einer Gleichspannungsquelle koppelbar ist, mit einem Nulldurchgangsdetektor, der ein Nulldurchgangssignal erzeugt, sobald der Strom durch den Serienresonanzkreis nach seinem Nulldurchgang einen Stellenwert überschreitet, und mit einem durch den Nulldurchgangsdetektor gesteuerten Zündimpulserzeuger zur Erzeugung von Zündimpulsen für die Thyristoren.

Derartige Serienresonanz-Wechselrichter können, wie u.a. aus der DE-OS 30 46 413 bekannt, in einem Röntgengenerator zur Erzeugung der Hochspannung dienen. Sie können aber auch für den Antrieb des Rotors einer Drehanoden-Röntgenröhre oder für die Erzeugung des Heizstroms der Röntgenröhre eingesetzt werden. Die Thyristoren sind dabei während jeweils einer Halbschwingung des Stromes durch den Serienresonanzkreis leitend. Die von einem solchen Wechselrichter erzeugbare elektrische Leistung ist umso größer, je dichter die Halbschwingungen aufeinander folgen.

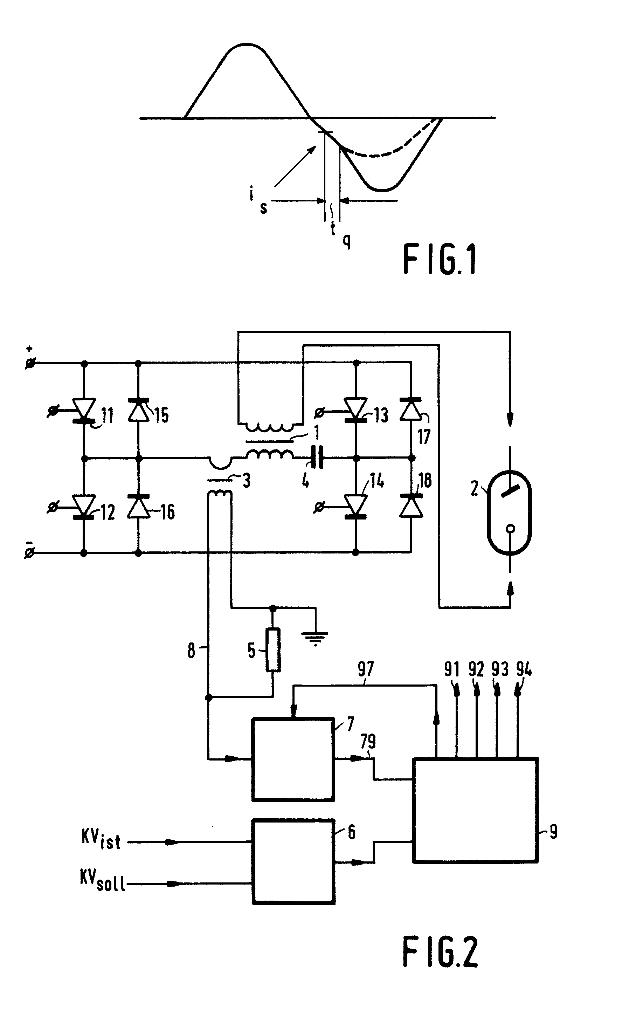

Es ist nicht möglich, die Halbschwingungen unmittelbar nacheinander durch die im Gegentakt gesteuerten Thyristoren fließen zu lassen, wie sich aus Figur 1 ergibt, die den zeitlichen Verlauf des Stromes durch den Serienresonanzkreis darstellt. Dabei ist angenommen, daß während der ersten (positiven) Halbschwingung ein Thyristor leitend ist. Nach dem Stromnulldurchgang übernimmt die dem Thyristor antiparallel geschaltete Diode zunächst den Rückschwingstrom, und der gezündete Thyristor verliert seine Leitfähigkeit. Die negative Halbschwingung des Rückschwingstromes (in Fig. 1 zum Teil gestrichelt angedeutet) hat als Folge der an den Verbraucher abgegebenen Wirkleistung eine kleinere Amplitude als die positive Halbschwingung.

Der in der folgenden Halbschwingung wirksame Thyristor darf erst gezündet werden, wenn der Strom durch den zuvor leitenden Thyristor durch Null gegangen ist und wenn anschließend die sogenannte Freiwerdezeit ($t_q$) verstrichen ist, die für den Abbau der Ladungsträger benötigt wird.

Zur Erkennung des Stromnulldurchgangs wird ein Stromnulldurchgangsdetektor - in der Regel ein Schmitt-Trigger - benutzt, der ein Nulldurchgangssignal erzeugt, sobald der Rückschwingstrom unter einen Wert $i_s$ gesunken ist. Dieser Wert $i_s$ muß genügend groß sein, um zu verhindern, daß dem Meßsignal überlagerte Störsignale die vorzeitige Erzeugung von Zündimpulsen bewirken. In ungünstigen Fällen ist der von der Belastung abhängige Rückschwingstrom aber kleiner als der Wert is, so daß kein Nulldurchgangssignal erzeugt wird. Infolgedessen kommt es auch nicht zur Erzeugung eines Zündimpulses für den nächsten Thyristor, so daß - bei Verwendung des Serienresonanzwechselrichters zur Hochspannungserzeugung für einen Röntgenstrahler - eine Röntgenaufnahme vorzeitig abgebrochen und der untersuchte Patient wegen der erforderlichen Wiederholung der Röntgenaufnahme einer unnötigen Strahlenbelastung ausgesetzt wird.

Es ist Aufgabe der vorliegenden Erfindung, einen Wechselrichter der eingangs genannten Art so auszugestalten, daß ein Betrieb auch bei kleinen Rückschwingströmen nicht unterbrochen wird.

Diese Aufgabe wird erfindungsgemäß gelöst durch eine Meßeinrichtung zum Messen des Zeitraums zwischen einem Zündimpuls und dem darauffolgenden Nulldurchgangssignal, einem Speicher zum Speichern dieses Zeitraums für den Normalbetrieb und eine Schaltung zum Erzeugen eines Hilfs-Nulldurchgangssignals, wenn der gemessene Zeitraum den gespeicherten Zeitraum um mehr als einen vorgegebenen Wert überschreitet.

Wenn nach einem Zündimpuls ein Nulldurchgangssignal ausbleibt, überschreitet bei der erfindungsgemäßen Schaltung der gemessene Zeitraum den gespeicherten, um den vorgegebenen Wert vergrößerten Zeitraum, so daß ein Hilfs-Nulldurchgangssignal erzeugt wird. Dieses bewirkt im Zündimpulserzeuger - ebenso wie die normalen Nulldurchgangsignale - die Erzeugung eines Zündimpulses.

Eine zweckmäßige Weiterbildung der Erfindung ist gekennzeichnet durch einen Komparator, der anspricht, wenn der gemessene Zeitraum dem gespeicherten Zeitraum entspricht und durch ein dem Komparator nachgeschaltetes rücksetzbares Zeitglied zum Erzeugen eines Hilfs-Nulldurchgangssignals eine definierte Zeitspanne nach dem Ansprechen des Komparators. Der Zeitraum, um den die gemessene Zeit länger sein muß als die gespeicherte Zeit, wenn das Hilfs-Nulldurchgangssignal erzeugt wird, wird hierbei also von dem Zeitglied bestimmt, das von dem die gespeicherte und die gemessene Zeit vergleichenden Komparator gesteuert wird.

Eine bevorzugte Weiterbildung der Erfindung ist gekennzeichnet durch einen Nullstrom-Detektor zum Erzeugen eines Nullstrom-Signals, wenn der Strom durch den Serienresonanzkreis einen vorgegebenen Wert unterschreitet und durch eine logische Verknüpfungsschaltung, die die Ausgangssignale des Komparators und des Nullstrom-Detektors miteinander verknüpft und das Zeitglied steuert. Diese Weiterbildung stellt sicher, daß der Hilfs-Nulldurchgangsimpuls tatsächlich nur erzeugt wird, wenn der (Rückschwingstrom) durch den Serienresonanzkreis zu Null geworden bzw. einen sehr kleinen Wert hat. Dieser Wert kann deutlich kleiner sein als der Wert $i_s$. Die Sicherheit gegen Störungen wird dabei dadurch erreicht, daß nur dann, wenn das Nullstromsignal während der gesamten Ablaufzeit des Zeitgliedes anliegt, das Hilfs-Nulldurchgangssignal erzeugt werden kann.

Die Erfindung wird nachstehend anhand der Zeichnung näher erläutert. Es zeigen

Fig. 1 den zeitlichen Verlauf des Schwingkreisstroms bei einem Serienresonanz-Wechselrichter,

Fig. 2 ein Blockschaltbild des für die Erfindung wesentlichen Teils eines Röntgengenerators und

Fig. 3 eine bei der Anordnung nach Fig. 2 eingesetzte Steuerschaltung.

Der in Fig. 2 dargestellte Vollbrücken-Serien-Resonanzwechselrichter umfaßt zwei parallel an die Versorgungsspannungsklemmen + und - angeschlossene Schaltzweige, die aus der Serienschaltung zweier Thyristoren 11, 12 bzw. 13, 14 bestehen, denen jeweils eine Diode 15, 16 bzw. 17, 18 antiparallelgeschaltet ist. Die Verbindungspunkte der Thyristoren 11 und 12 bzw. 13 und 14 sind über einen Brückenzweig miteinander verbunden, der die Serienschaltung der Primärwicklungen eines Hochspannungstransformators 1 zur Erzeugung der Hochspannung für die Röntgenröhre 2, eines Stromwandlers 3 zur Messung des Istwertes des durch den Brückenzweig fließenden Stromes und eines Kondensators 4 umfaßt. Die Hochspannung an der Sekundärseite des Hochspannungstransformators 1 wird auf nicht näher dargestellte Weise gleichgerichtet, geglättet und der Röntgenröhre 2 zugeführt.

Als Folge der zwischen Primär- und Sekundärwicklung erforderlichen Isolation dieses Transformators ergibt sich eine relativ große Streuinduktivität, die zusammen mit dem Kondensator 4 einen Serienresonanzkreis bildet. Die Thyristoren 11..14 werden im Gegentakt gezündet, so daß in der einen Phase der Serienresonanzkreis über die Thyristoren 11, 14 mit der Versorgungsspannung und in der anderen Phase über die Thyristoren 12, 13 mit der Versorgungsspannung verbunden ist.

An die Sekundärwicklung des Stromwandlers 3 ist ein Widerstand 5 angeschlossen. Die Spannung an diesem Widerstand ist dem Momentanwert des Stromes durch den Serienresonanzkreis 1,4 protional. Sie wird einem Stromdetektor 7 zugeführt. Der Stromdetektor 7 liefert über eine Leitung 79 Steuerimpulse für einen Zündimpulserzeuger 9, der an seinen Ausgängen 91..94 Zündimpulse für die Thyristoren 11..14 liefert und an seinem Ausgang 97 jedesmal dann einen Impuls erzeugt, wenn die Diagonalzweige 11, 14 bzw. 12, 13 gezündet werden. Dieser Impuls wird dem Stromdetektor 7 zugeführt.

Außerdem ist ein Regler 6 vorgesehen, der in nicht näher dargestellter Weise den Istwert $KV_{ist}$ der Röhrenspannung mit einem Sollwert $KV_{soll}$ vergleicht und dem Zündimpulserzeuger ein der Regelabweichung entsprechendes Signal liefert.

Der Zündimpulserzeuger 9 wird von dem Regler 6 und dem Stromdetektor 7 in der Weise gesteuert, daß zwar die Zündfrequenz von der vom Regler 6 ermittelten Regelabweichung bestimmt wird, daß aber kein Zündimpuls erzeugt wird, bevor der Stromdetektor 7 über die Leitung 79 signalisiert hat, daß der zuvor leitende Thyristorzweig gesperrt ist.

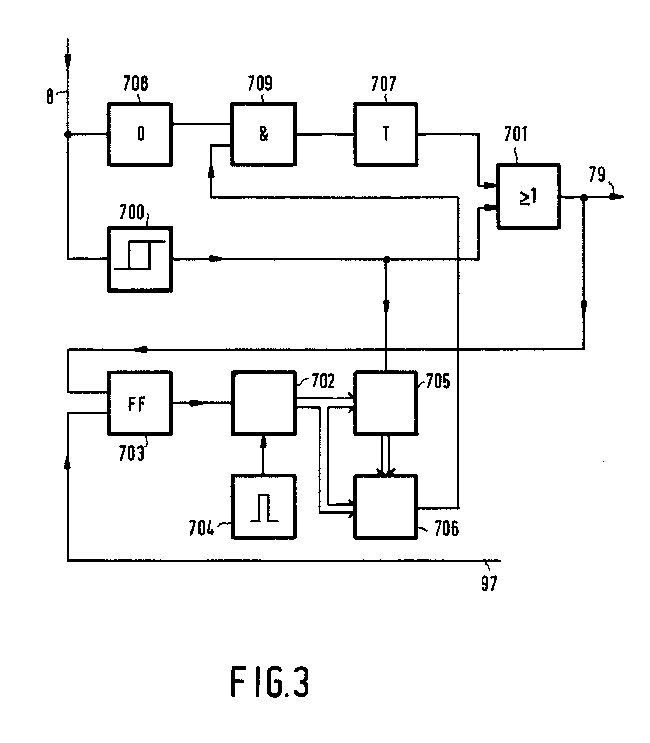

Der Aufbau des Stromdetektors 7 ergibt sich aus Fig. 3. Der Detektor 7 enthält einen Nulldurchgangsdetektor 700, der über ein ODER-Glied 701 mit der Ausgangsleitung 79 gekoppelt ist und der nach einem Zündimpuls immer dann einen Nulldurchgangsimpuls erzeugt, wenn der Resonanzstrom seine Polarität umgekehrt und den Wert $i_s$ durchlaufen hat. Insoweit entspricht der Aufbau des Stromdetektors 7 dem Stand der Technik.

Zusätzlich wird immer dann ein Hilfs-Nulldurchgangsimpuls erzeugt, wenn die Amplitude des Rückschwingstromes den Wert $i_s$ nicht überschreitet, wodurch in solchen Fällen eine Unterbrechung der Röntgenaufnahme verhindert wird. Zu diesem Zweck wird die Zeit zwischen einem Zündimpuls und dem nachfolgenden Nulldurchgangsimpuls gemessen und abgespeichert. Diese Zeit steht zur Kontrolle zur Verfügung und kann dazu benutzt werden, nach Ablauf einer zusätzlichen Sicherheitszeit den Hilfs-Nulldurchgangsimpuls zu erzeugen.

Zu diesem Zweck umfaßt der Detektor 7 einen Zähler 702. Dieser wird über ein Flip-Flop 703, das eingangsseitig mit den Ausgängen 79 bzw. 97 gekoppelt ist, gesteuert. Jeder Zündimpuls (auf der Leitung 97) startet über das Flip-Flop 703 den Zähler 702, der die Impulse eines Taktgenerators 704 zählt. Der Nulldurchgang eines jeden (Hilfs-)-Nulldurchgangsimpulses (auf der Leitung 79) setzt den Zähler wieder zurück. Ein Speicher(latch) 705 übernimmt - gesteuert durch den Nulldurchgangsdetektor 700 - den Zählerstand zum Zeitpunkt der Vorderflanke des Nulldurchgangsimpulses. Der Zählerstand ist daher ein Maß für die Zeit zwischen dem Zündimpuls und dem Nulldurchgangsimpuls.

Ein Komparator 706 vergleicht den im Speicher 705 gespeicherten Zählerstand mit dem aktuellen Zählerstand und spricht an, wenn der aktuelle Zählerstand den gespeicherten Zählerstand überschreitet. In diesem Fall wird von einem dem Komparator nachgeschalteten Zeitglied 707 nach Ablauf einer definierten Zeitspanne ein Hilfs-Nulldurchgangssignal erzeugt, das über das ODER-Gatter 701 dem Ausgang 79 zugeführt wird - falls nicht zuvor der Nulldurchgangsdetektor 700 noch ein Nulldurchgangssignal erzeugt.

Um sicherzustellen, daß nicht ein Hilfs-Nulldurchgangssignal erzeugt wird, wenn noch Thyristoren leitend sind, ist ein mit seinem Eingang an die Leitung 8 angeschlossener Nullstrom-Detektor 708 vorgesehen. Dabei kann es sich um einen Fenster-Diskriminator handeln, dessen Ausgangssignal einen ersten Schaltzustand einnimmt, wenn sich das Eingangssignal innerhalb eines zum Nullpunkt symmetrischen Bereiches der Eingangsspannung befindet und dessen Ausgangssignal einen zweiten Zustand einnimmt, wenn sich das Eingangssignal außerhalb dieses Bereiches befindet. Die Bereichsgrenzen sollten dabei deutlich niedriger liegen als der Wert $i_s$, bei dem der Nulldurchgangsdetektor 700 anspricht. Diese Bereichsgrenzen sollen einem Strom in dem Serienresonanzkreis 1,4 entsprechen, der unterhalb des Haltestroms der Thyristoren liegt.

Die Ausgänge des Nullstromdetektors 708 und des Komparators 706 sind über ein UND-Glied 709 mit dem Zeitglied 707 verbunden. Nur wenn der Komparator 706 angesprochen hat, ohne daß in der durch das Zeitglied 707 bestimmten Zeitspanne ein Nulldurchgangsimpuls auftritt, und nur wenn gleichzeitig innerhalb dieser Zeitspanne das Eingangssignal des Nullstromdetektors 708 innerhalb des erwähnten Bereiches bleibt, wirkt das UND-Glied 709 so auf das Zeitglied 707 ein, daß nach Ablauf der Zeitspanne das Hilfs-Nulldurchgangssignal erzeugt wird. Wenn hingegen innerhalb der Zeitspanne entweder ein Nulldurchgangssignal erzeugt wird oder das Eingangssignal des Nullstromdetektors 708 den erwähnten Bereich zumindest kurzfristig überschreitet, wird das Zeitglied 707 zurückgesetzt. Es muß sich dabei also um ein rücksetzbares Zeitglied handeln. Es kann beispielsweise ebenfalls einen die Taktimpulse des Taktimpulsgenerators 704 zählenden Zähler enthalten.

Wenn die Bereichsgrenzen des Nullstromdetektors 708 deutlich unterhalb des Wertes $i_s$ liegen, kann das Ausgangssignal des Detektors 708 relativ stark von Störungen am Eingang beeinflußt werden. Der Einfluß dieser Störungen auf das Hilfs-Nulldurchgangssignal wird aber dadurch verringert, daß nur dann, wenn die Eingangspannung des Detektors 708 während der durch das Zeitglied 707 vorgegebenen Zeitspanne innerhalb des erwähnten Bereichs bleibt, ein Hilfs-Nulldurchgangssignal vom Zeitglied 707 erzeugt wird. Ein geeigneter Wert für diese Zeitspanne liegt bei 20 bis 30 $\mu$sec. (bei einer Dauer der Halbschwingung (Fig. 1) von bis zu 100 $\mu$sec). Wird der Wert für die Zeitspanne wesentlich größer gewählt, dann wird das Hilfs-Nulldurchgangssignal so spät erzeugt, daß sich ein Einbruch der Hochspannung ergibt. Wird die Zeitspanne hingegen wesentlich kürzer gewählt als der angegebene Wert, dann machen sich Störungen stärker bemerkbar.

Beim Ausführungsbeispiel nach Figur 3 ist der Stromdetektor 7 so aufgebaut, daß bei jedem Nulldurchgangsimpuls der Zeitraum zwischen einem Zündimpuls und dem Nulldurchgangsimpuls gemessen wird. Grundsätzlich würde es genügen, wenn diese Zeit von vornherein im Speicher 705 gespeichert wäre oder wenn sie nur nach dem ersten Zündimpuls oder in regelmäßigen zeitlichen Abständen, beispielsweise bei jedem vierten Zündimpuls gemessen und gespeichert würde. Allerdings könnten diese Modifikationen das Ausfallen eines Nulldurchgangsimpulses weniger genau erfassen als die in Figur 3 dargestellte Version.

Anstelle der digitalen Schaltungskomponenten 702, 704..707 können auch analoge Bausteine verwendet werden. Die Zeit könnte dabei mit Hilfe eines Integrators gemessen werden, dem eine konstante Eingangsspannung zugeführt wird, und der Speicher 705 müßte dabei durch eine sample-and-hold-Schaltung ersetzt werden. Es ist aber auch möglich, die gesamte Schaltung mit Ausnahme der Komponenten 700 und 708 mit Hilfe eines geeignet programmierten Mikroprozessors zu realisieren, wobei sich das Programm aus den in Verbindung mit Figur 3 geschilderten Funktionsablauf ergibt.

Die Erfindung wurde vorstehend anhand eines Serienresonanzwechselrichters für die Erzeugung der Hochspannung an einer Röntgenröhre erläutert. Sie ist aber auch bei Serienresonanzwechselrichtern anwendbar, die in einem Röntgengenerator zur Erzeugung des Heizstroms für die Röntgenröhre oder zum Antrieb einer Drehanode benutzt werden und darüberhinaus auch bei Serienresonanzwechselrichtern außerhalb der Röntgentechnik.

**Patentansprüche**

1. Serienresonanz-Wechselrichter, insbesondere für einen Röntgengenerator, mit einem Serienresonanzkreis, der über wenigstens zwei im Gegentakt geschaltete Thyristoren und dazu antiparallel geschaltete Dioden mit einer Gleichspannungsquelle koppelbar ist, mit einem Nulldurchgangsdetektor, der ein Nulldurchgangssignal erzeugt, sobald der Strom durch den Serienresonanzkreis nach seinem Nulldurchgang einen Stellenwert überschreitet, und mit einem durch den Nulldurchgangsdetektor gesteuerten Zündimpulserzeuger zur Erzeugung von Zündimpulsen für die Thyristoren,

   gekennzeichnet durch eine Meßeinrichtung (702..704) zum Messen des Zeitraums zwischen einem Zündimpuls und dem darauffolgenden Nulldurchgangssignal, einem Speicher (705) zum Speichern dieses Zeitraums für den Normalbetrieb und eine Schaltung (706..709) zum Erzeugen eines Hilfs-Nulldurchgangssignals, wenn der gemessene Zeitraum den gespeicherten Zeitraum um mehr als einen vorgegebenen Wert überschreitet.

2. Serienresonanz-Wechselrichter nach Anspruch 1,
gekennzeichnet durch einen Komparator (706), der anspricht, wenn der gemessene Zeitraum dem gespeicherten Zeitraum entspricht und durch ein dem Komparator nachgeschaltetes rücksetzbares Zeitglied (707) zum Erzeugen eines Hilfs-Nulldurchgangssignals eine definierte Zeitspanne nach dem Ansprechen des Komparators.

3. Serienresonanz-Wechselrichter nach Anspruch 2,
gekennzeichnet durch einen Nullstrom-Detektor (708) zum Erzeugen eines Nullstrom-Signals, wenn der Strom durch den Serienresonanzkreis einen vorgegebenen Wert unterschreitet und durch eine logische Verknüpfungsschaltung (704), die die Ausgangssignale des Komparators (706) und des Nullstrom-Detektors miteinander verknüpft und das Zeitglied (707) steuert.

4. Serienresonanz-Wechselrichter nach einem der Ansprüche 1 bis 3,
dadurch gekennzeichnet, daß die Meßeinrichtung einen Zähler (702) zum Zählen von Taktimpulsen zwischen einem Zündimpuls und dem darauffolgenden Nulldurchgangssignal enthält.

5. Serienresonanz-Wechselrichter nach einem der Ansprüche 1 bis 4,
dadurch gekennzeichnet, daß der Speicher (705) mit der Meßeinrichtung (702..704) und dem Nulldurchgangsdetektor (700) gekoppelt ist, derart, daß bei jedem Nulldurchgangssignal der Zählerstand in dem Speicher (705) übernommen wird.

# FIG.1

# FIG.2

FIG.3